(19) Europäisches Patentamt
European Patent Office
Office européen des brevets

(11) **EP 1 898 537 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
*H04B 10/08* *(2006.01)*    *G01M 11/00* *(2006.01)*

(21) Anmeldenummer: **07016712.7**

(22) Anmeldetag: **27.08.2007**

(54) **Diagnoseverfahren und Diagnosechip zur Bandbreitenbestimmung optischer Fasern**

Diagnostic method and diagnosis chip for waveband determination of optical filaments

Procédé de diagnostic et puce de diagnostic pour la détermination de la largeur de bande de fibres optiques

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **07.09.2006 DE 102006042525**

(43) Veröffentlichungstag der Anmeldung:
**12.03.2008 Patentblatt 2008/11**

(73) Patentinhaber: **Phoenix Contact GmbH & Co. KG 32825 Blomberg (DE)**

(72) Erfinder: **Pape, Andreas 33034 Brakel (DE)**

(74) Vertreter: **Kampfenkel, Klaus Blumbach - Zinngrebe Patentanwälte Elisabethenstrasse 11 64283 Darmstadt (DE)**

(56) Entgegenhaltungen:
**EP-A- 1 018 642    EP-A- 1 703 650 WO-A-00/62033**

**Beschreibung**

Die Erfindung betrifft allgemein die optische Datenübertragung und insbesondere ein Verfahren und eine Vorrichtung zur Diagnose optischer Fasern.

Für Backbone-Verkabelungen sowie im Zusammenhang mit FastEthernet und Gigabit-Ethernet werden Verkabelungen auf der Basis optischer Kabel immer interessanter. Die Signalübertragung in optischen Fasern, auch als Lichtwellenleiter (LWL) bezeichnet, erfolgt unidirektional über Lichtimpulse, d.h. nur in eine Richtung, weshalb typischerweise mindestens zwei optische Fasern pro Kabel verwendet werden. Die Lichtimpulse werden in der Regel mittels einer Laser-Diode oder einer Lumineszenz-Diode in die Faser eingekoppelt.

Die Vorteile der optischen Datenübertragung bestehen in der hohen erreichbaren Übertragungsrate und der hohen Reichweite, sowie in der Unempfindlichkeit gegenüber elektromagnetischer Strahlung, der Abhörsicherheit und Beständigkeit gegenüber Hitze und Witterungseinflüssen. Durch die dünnen Innenleiter sind optische Kabel außerdem flexibel zu verlegen.

Neben reinen Glasfasern haben aufgrund der geringeren Kosten optische Fasern aus Polymeren eine große Verbreitung gefunden. Optische Fasern aus Polymeren werden als POF-Fasern (Plastic Optical Fiber) bezeichnet und sind reine Plastikfasern, die aus einem transparenten Kern und Mantel besteht, wobei der Mantel einen geringeren Brechungsindex aufweist als das Kernmaterial. Als Kernmaterial werden Polymere wie Polymethylmethacrylat oder Polycarbonat eingesetzt. Zu den polymeren optischen Fasern zählen neben den rein polymeren Fasern auch hybride Fasern, welche eine Kombination aus Glasfaser und Plastikummantelung aufweisen, wie beispielsweise die HCS-Faser (Hard Polymer Cladded Silica).

Die mit Lichtwellenleitern direkt überbrückbare Entfernung ist durch verschiedene Dispersions- und Streuungseffekte begrenzt. Sie ist abhängig von der zu übertragenden Bandbreite und wird daher typischerweise als Bandbreiten-Längen-Produkt angegeben. Gegenüber Glasfasern weisen Polymer-Fasern wie POF oder HCS deutlich höhere Dämpfungswerte auf. POF- bzw. HCS-Fasersysteme werden bei Streckenlängen von 50 bzw. 100 m und Datenraten von 100 Mbit/s bzw. 125 MBd bereits am Rande ihrer technischen Möglichkeiten betrieben. Um eine sichere Datenübertragung zu gewährleisten ist eine Diagnose der optischen Fasern der Übertragungsstrecke heute ein übliches Verfahren.

Ein Verfahren zur Diagnose von optischen Lichtwellenleiterstrecken, insbesondere zur optischen Diagnose beim Interbus, ist beispielsweise aus DE 42 17 899 C2 bekannt. Das dort beschriebene Verfahren dient der Systemoptimierung von LWL-Übertragungsstrecken bei der Inbetriebnahme und sieht ein Verändern der optischen Sendeleistung eines Sendeempfängers vor, bis das auf der Gegenseite empfangene optische Signal den Systemanforderungen entspricht.

Aus EP 1 227 604 A2 ist ein Verfahren bekannt, bei welchem für eine optische Übertragungsstrecke deren aktuelle Pegelreserve zur Empfindlichkeitsgrenze, also zwischen der aktuellen Sendeleistung des Senders und der aktuellen Empfindlichkeitsgrenze des Empfängers, bestimmt wird.

Die optische Diagnose nach dem Stand der Technik zielt darauf ab, die Dämpfung von optischen Verbindungsstrecken zu diagnostizieren, um auf eine sichere Übertragung zu schließen. Dies ist bei niederbitratigen Systemen auch ausreichend. Allerdings ist bei Datenraten ab 100 Mbit/s bei Polymer-(POF) und HCS-Fasern nicht mehr die Kabeldämpfung, sondern die Bandbreite des Kabels der limitierende Faktor für eine fehlerfreie Übertragung. Diese ist aber durch die heute bekannten Verfahren nicht automatisch prüfbar. Ein weiterer Nachteil bekannter Systeme liegt darin, daß der verwendete Fasertyp, wie zum Beispiel POF oder HCS, die an derselben Schnittstelle betreibbar sind, nicht automatisch festgestellt werden kann. Dies wirkt sich auch nachteilig auf die Dämpfungsdiagnose aus, da unterschiedliche Fasertypen auch ein unterschiedliches Dämpfungsverhalten aufweisen und damit die Diagnosedaten unterschiedlich bewertet werden müssen. Typischerweise muß heute der Fasertyp händisch in der Diagnosesoftware angegeben werden.

Der am 18. April 2005 vom selben Anmelder der vorliegenden Erfindung eingereichten deutschen Patentanmeldung 10 2005 016 522.2, zu welcher die vorliegende Erfindung eine Weiterentwicklung darstellt, lag als Aufgabe zugrunde, einen Weg aufzuzeigen, wie die Diagnose optischer Fasern oder Kabel verbessert und/oder vereinfacht werden kann. Insbesondere bestand die Aufgabe darin, ein Verfahren und eine Vorrichtung zur einfachen und kostengünstigen Bandbreitenbestimmung optischer Fasern anzugeben, sowie einen Weg zur Systemoptimierung von optischen Datenübertragungsstrecken aufzuzeigen.

Hierzu wurde ein Verfahren zur Bestimmung der Bandbreite zumindest einer optischen Faser vorgeschlagen mit den Schritten des Einkoppelns von Licht mit einer ersten optischen Leistung und einer ersten Modulationsfrequenz in die optische Faser, des Messens eines ersten Signalpegels in Abhängigkeit der optischen Leistung des durch die optische Faser hindurchgeleiteten Lichtes der ersten Modulationsfrequenz, des Einkoppelns von Licht mit einer zweiten optischen Leistung und einer zweiten Modulationsfrequenz in die optische Faser, des Messens eines zweiten Signalpegels in Abhängigkeit der optischen Leistung des durch die optische Faser hindurchgeleiteten Lichtes der zweiten Modulationsfrequenz, und des Ermittelns der Bandbreite der optischen Faser in Abhängigkeit der ersten und zweiten eingekoppelten optischen Leistung und/oder des gemessenen ersten und zweiten Signalpegels unter Verwendung einer vorbestimmten Vorschrift, welche das frequenzabhängige Dämpfungsverhalten der optischen Faser beschreibt.

Soweit im Folgenden nicht anders angegeben, wird der Begriff Frequenz im Sinne einer Modulationsfrequenz eines optischen Signals verwendet.

Das Prinzip des Verfahrens gemäß der deutschen Patentanmeldung 10 2005 016 522.2 sah im wesentlichen vor, die Dämpfung zweier optischer Signale unterschiedlicher Frequenz zu bestimmen und daraus anhand eines vorbekannten charakteristischen Frequenzgangs der Dämpfung der optischen Faser deren Bandbreite zu ermitteln.

Unter Dämpfung sind die Verluste des durch eine optische Faser durchgehenden Lichtes zu verstehen. Ausgedrückt wird die Dämpfung typischerweise als zehnfacher Logarithmus des Verhältnisses der optischen Leistung am Eingang und Ausgang der optischen Faser:

$$(1) \quad A = 10 \cdot \log \frac{P_{Eingang}}{P_{Ausgang}} \, [dB]$$

Die Dämpfung wird hauptsächlich durch die physikalischen Vorgänge Absorption und Streuung sowie durch mechanische Biegung verursacht.

Bei optischen Fasern, welche eine Tiefpaß-Charakteristik aufweisen, entspricht die Bandbreite derjenigen Modulationsfrequenz, bei der die Lichtleistung verglichen zum Wert bei der Frequenz Null um 50 % bzw. 3 dB optisch abgefallen ist.

Um die Genauigkeit des Verfahrens gemäß der deutschen Patentanmeldung 10 2005 016 522.2 zu erhöhen, wiesen die Signale der ersten und zweiten Frequenz vorteilhaft eine stark unterschiedliche frequenzabhängige Dämpfung auf.

Vorteilhaft war vorgesehen, dass die erste Frequenz kleiner, insbesondere zumindest um den Faktor 10, insbesondere zumindest um den Faktor 100, kleiner als die Bandbreite der optischen Faser ist und die frequenzabhängige Dämpfung der optischen Faser bei der ersten Frequenz im wesentlichen Null ist, da unter dieser Voraussetzung die Rechenvorschrift zum Ermitteln der Bandbreite deutlich vereinfacht wird.

Die zweite Frequenz lag vorteilhaft im Bereich der Bandbreite der optischen Faser, wobei die zweite Frequenz zweckmäßigerweise im Bereich der ideal zu erwartenden Bandbreite der optischen Faser und damit typischerweise oberhalb der realen Bandbreite lag, so dassdas Signal der zweiten Frequenz eine stärkere Dämpfung als das Signal der ersten Frequenz erfährt. Insbesondere war vorgesehen, dass die optische Faser eine frequenzabhängige Dämpfung für durchgehendes Licht der zweiten Frequenz aufweist, welche zwischen 1 und 5 dB, insbesondere zwischen 2 und 4 dB, insbesondere etwa 3 dB, oberhalb der frequenzabhängigen Dämpfung für durchgehendes Licht der ersten Frequenz liegt.

Der Grundgedanke der Erfindung gemäß der deutschen Patentanmeldung 10 2005 016 522.2 bestand somit darin, die Bandbreite einer optischen Faser durch zwei Messwerte zu ermitteln, einen ersten Messwert, der als Referenz dient und im wesentlichen nicht durch die Bandbreitenbegrenzung der optischen Faser beeinflusst wird, und einen zweiten, bandbreitenabhängigen Messwert. Die Ermittlung der Bandbreite aus diesen zwei Messwerten wird dabei durch die Verwendung einer vorbestimmten Vorschrift, welche das frequenzabhängige Dämpfungsverhalten der optischen Faser beschreibt, ermöglicht.

Die der Aufgabe, die Bandbreite einer optischen Verbindung zwischen zwei Teilnehmern zu messen, wird durch die deutsche Patentanmeldung 10 2005 016 522.2 derart gelöst, dass die für die Bestimmung der Bandbreite typischerweise notwendigen Lichtleistungsmessungen bei zwei verschiedenen Frequenzen oder Datenraten durchgeführt werden, da als Referenzmessung eine Messung bei einer niedrigeren Frequenz vorgesehen ist. Diese sind bei der in der deutschen Patentanmeldung 10 2005 016 522.2 für POF- und HCS-Fasern beschriebenen Lösungen typischerweise 10 und 100 Mbit/s. Somit wurde bereits vorteilhaft auf besonders einfache Weise eine Bandbreitenmessung mit Hilfe eines Standard-Ethernet-Gerätes ermöglicht.

Das Umschalten der Datenrate ist zwangsläufig immer mit einem Link-Abbruch verknüpft, was zu einem zumindest kurzzeitigen Ausfall der Datenkommunikation führt, so dass das in der deutschen Patentanmeldung 10 2005 016 522.2 beschriebene Verfahren typischerweise nicht online im laufenden Kommunikationsbetrieb einer LWL-Schnittstelle durchführbar ist.

Der vorliegenden Erfindung liegt somit die Aufgabe zugrunde, den Gegenstand der deutschen Patentanmeldung 10 2005 016 522.2 derart weiterzuentwickeln, dass die Diagnose optischer Fasern oder Kabel weiter vereinfacht werden kann. Insbesondere besteht die Aufgabe darin, ein Verfahren und eine Vorrichtung zur einfachen und kostengünstigen Bandbreitenbestimmung optischer Fasern anzugeben, mittels derer eine Bandbreitenmessung auch online ohne Rückflüsse auf die Kommunikation durchführbar ist.

Ein weiteres Diagnose-verfahren zur Bandbreitebestimmung optischer Fasern ist aus der EP-A-1018642 bekannt.

Die Aufgabe wird durch ein Verfahren gemäß Anspruch 1 und ein elektronisches Bauteil gemäß Anspruch 25 gelöst. Vorteilhafte und/oder bevorzugte Ausführungsformen und Weiterbildungen sind Gegenstand der jeweiligen Unteransprüche.

Erfindungsgemäß ist somit vorgesehen, dass die erste und die zweite Modulationsfrequenz im wesentlichen den gleichen Wert aufweisen, so dass der erste und zweite Signalpegel bei im wesentlichen der gleichen Modulationsfrequenz ermittelt werden. Gemäß der vorliegenden Erfindung ist daher vorgesehen, den als Referenz dienenden Messwert bei der gleichen Modulationsfrequenz zu ermitteln, bei der auch der bandbreitenabhängige Messwert ermittelt wird.

Vorteilhaft weisen dabei wiederum die erste optische Leistung des eingekoppelten Lichtes der ersten Modulationsfrequenz und die zweite optische Leistung des eingekoppelten Lichtes der zweiten Modulationsfrequenz vorbestimmte Werte auf, welche insbesondere vorzugsweise im wesentlichen gleich sind.

Die Erfinder haben überraschend herausgefunden, dass bei gleicher Eingangsleistung des eingekoppelten Lichtes der ersten und zweiten Modulationsfrequenz und bei vorgegebener Vorschrift zur Beschreibung des frequenzabhängigen Dämpfungsverhaltens der Faser die Bandbreite aus dem Verhältnis der jeweils gemessenen ersten und zweiten Signalpegel auch dann ermittelt werden kann, wenn die erste und zweite Modulationsfrequenz im wesentlichen gleich sind. Erfindungsgemäß kann daher vorteilhaft vorgesehen sein, dass das eingekoppelte Licht der ersten und zweiten Modulationsfrequenz identisch ist und die Bandbreitenmessung auf der unterschiedlichen Art der gemessenen Signalpegel basiert.

Alternativ ist wiederum vorteilhaft vorgesehen, das Überschreiten vorgegebener Schwellwerte zu detektieren. Dementsprechend wird vorteilhaft die erste optische Leistung des eingekoppelten Lichtes der ersten Modulationsfrequenz variiert, bis der gemessene erste Signalpegel einen vorbestimmten ersten Schwellwert erreicht, und die zweite optische Leistung des eingekoppelten Lichtes der zweiten Modulationsfrequenz variiert, bis der gemessene zweite Signalpegel einen vorbestimmten zweiten Schwellwert erreicht.

Vorteilhaft sind der erste Schwellwert bei der ersten Modulationsfrequenz und der zweite Schwellwert bei der zweiten Modulationsfrequenz gleich, so dass auf einfache Weise die Bandbreite der Faser aus den jeweiligen optischen Eingangsleistungen beziehungsweise dazu proportionalen Größen ermittelt werden kann.

Die zumindest eine optische Faser umfasst vorzugsweise ein Polymer und/oder ein Glas und ist insbesondere als POF-oder HCS-Faser ausgebildet. Reine Glasfasern liegen aber ebenso im Rahmen der Erfindung.

Eine vorteilhafte Vorschrift, welche das frequenzabhängige Dämpfungsverhalten einer optischen Faser, insbesondere einer POF- oder HCS-Faser, beschreibt, ist eine Gaußsche Tiefpaß-Funktion, welche durch die Gleichung

$$(2) \quad P(f) = P_0 \cdot \exp\left(-\frac{f^2}{f_0^2}\right)$$

definiert wird.

In einer besonders bevorzugten Ausführungsform der Erfindung umfasst das Messen des ersten Signalpegels das Bestimmen einer durchschnittlichen oder gemittelten Lichtleistung (AVG). Dieser Messwert ist im wesentlichen unabhängig von den Bandbreiteneinflüssen und dient daher als Referenzwert.

Das Messen des zweiten Signalpegels umfasst besonders bevorzugt das Bestimmen der Amplitude des modulierten optischen Signals nach dem OMA-Verfahren (Optical Modulated Amplitude), da die Amplitude des modulierten optischen Signals von der Bandbreite der optischen Faser beeinflusst wird.

Der Einsatz der unterschiedlichen Lichtleistungsmessverfahren AVG und OMA ermöglicht eine Bandbreitenbestimmung der optischen Faser anhand von Messwerten, die bei nur einer Modulationsfrequenz oder Datenrate ermittelt werden.

Die somit im wesentlichen gleiche erste und zweite Modulationsfrequenz liegt vorzugsweise etwa bei der Bandbreite der optischen Faser. Vorteilhaft kann sie auch im Bereich der ideal zu erwartenden Bandbreite der optischen Faser und damit typischerweise oberhalb der realen Bandbreite liegen.

Diese bevorzugte Ausführungsform der vorliegenden Erfindung beruht somit auf der Erkenntnis, dass, wenn man das theoretische Bandbreitenverhalten einer LWL-Verbindung oder einer optischen Faser kennt und bei einer festen Datenrate oder Modulationsfrequenz den Peak-to-Peak- oder OMA-Wert der LWL-Lichtleistung sowie die durchschnittliche Lichtleistung (AVG; average) aufnimmt, man die 3dB-Bandbreite auch bei nur einer Datenrate oder Modulationsfrequenz ermitteln kann. Damit ist das erfindungsgemäße Verfahren auch online ohne Rückflüsse auf die Kommunikation einer optischen Kommunikationsverbindung durchführbar.

Dies liegt im wesentlichen an der Tatsache, dass die mittlere Lichtleistung unabhängig von den Bandbreiteneinflüssen durch das Kabel oder die optische Faser auf die optischen Signale ist, während der Peak-to-Peak-Wert, also die Amplitude des modulierten optischen Signals sehr wohl von der Bandbreite des Kabels beeinflusst wird. Vereinfacht ausgedrückt hat die Messung der gemittelten Lichtleistung AVG die Funktion einer Referenzmessung ähnlich der Messung der Lichtleistung bei der niedrigeren Modulationsfrequenz gemäß dem bereits in der deutschen Patentanmeldung 10 2005 016 522.2 beschriebenen Verfahren.

Mit Vorteil erfolgt das Messen des ersten und/oder zweiten Signalpegels mittels eines optischen Transceivers, welcher eine DMI-Schnittstelle (Diagnostic Monitoring Interface) gemäß SFF-8472 aufweist, da dieser vorteilhaft dazu ausgebildet ist, die mittlere Lichtleistung (AVG) und die Amplitude des modulierten optischen Signals (OMA) zu messen.

Die DMI-Schnittstelle (Diagnostic Monitoring Interface) ist eine erweiterte serielle Schnittstelle, welche zu Diagnosezwecken Zugriff auf bestimmte Betriebsparameter eines optischen Transceivers ermöglicht. Zu diesen Betriebsparametern gehören zum Beispiel die Temperatur des Transceivers, die Ausgangsleistung, sowie insbesondere die vom Transceiver empfangene optische Leistung.

Vorteilhaft kann empfängerseitig auch ein optischer Transceiver vorgesehen sein, mit welchem nicht direkt die empfangene optische Leistung ermittelt, sondern nur Schwellwerte für eine bestimmte Lichtleistung detektiert werden können. Ein solcher Transceiver kann einfacher aufgebaut und damit kostengünstiger sein. Die Detektion von Schwellwerten für eine bestimmte Lichtleistung ist beispielsweise bei PSI-MOS-Geräten von PSM umgesetzt.

Die Bestimmung der Bandbreite erfolgt in der auf der Detektion von Schwellwerten basierenden Ausführungsform auf fast dieselbe Art wie in der auf der genauen Messung der empfangenen optischen Lichtleistung basierenden Ausführungsform. Es wird dazu die optische Sendeleistung des Lichtes der ersten und der zweiten Modulationsfrequenz möglichst genau variiert, während auf der Empfangsseite das Erreichen eines vorgegebenen Schwellwertes der empfangenen optischen Lichtleistung überwacht wird. Dies ist in vielen Fällen technisch einfacher umzusetzen, als eine genaue Lichtleistungsmessung vorzunehmen. Vorzugsweise umfasst das Messen der empfangenen optischen Lichtleitung das Messen der AVG- und der OMA-Lichtleistung, wobei für die AVG- und die OMA-Lichtleistung jeweils unterschiedliche Schwellwerte vorgesehen sein können.

Um die Bandbreite zu bestimmen wird bei einer vorgegebenen Datenrate oder Modulationsfrequenz, welche gleichzeitig der ersten und zweiten Modulationsfrequenz entspricht, die Lichtleistung des Senders angepasst, bis die vorbestimmten Schwellwerte beim Empfänger erreicht werden.

Die beschriebene Ausführungsform, basierend auf der Beeinflussung der Sendeleistung, ist auch insofern in der technischen Umsetzung einfacher, als meist ein ziemlich genauer linearer Zusammenhang zwischen Sendeleistung und Senderstrom bei LEDs und Lasern besteht und es technisch einfacher ist, Ströme im Bereich vom etwa 1 bis 100 mA genau einzustellen, als Lichtleistungen am Empfänger zu messen, da diese Messungen typischerweise auf der Auswertung von Diodenströmen im Bereich von μA oder kleiner beruhen.

Besonders bevorzugt erfolgt das Messen des ersten und zweiten Signalpegels, beispielsweise mit Hilfe der DMI-Schnittstelle eines Transceivers, für eingekoppelte Signale, welche ein kontinuierliches "10"-Bitmuster aufweisen, wie es beispielsweise mit dem IDLE-Signal eines Netzwerks wie z.B. 10Base-FL oder 100Base-FX zur Verfügung steht.

Das erfindungsgemäße Verfahren umfasst ferner vorteilhaft die Schritte des Ermittelns der Länge der optischen Faser mittels einer Laufzeitmessung und des Bestimmens des Bandbreiten-Längen-Produktes der optischen Faser aus der ermittelten Bandbreite und der ermittelten Länge der optischen Faser.

In Abhängigkeit des Bandbreiten-Längen-Produktes kann dann besonders vorteilhaft der Fasertyp der optischen Faser mittels hinterlegter Wertebereiche des Bandbreiten-Längen-Produktes für unterschiedliche Fasertypen ermittelt werden.

Die Erfindung sieht ferner ein Verfahren zum Aufbauen einer Verbindung zur Datenkommunikation zwischen einem ersten und einem zweiten Endgerät, welche mittels einer optischen Datenübertragungsstrecke mit zumindest einer optischen Faser miteinander verbunden sind, vor, welches vorteilhaft eine Initialisierungsphase vorsieht, innerhalb derer die Bandbreite der optischen Faser gemäß dem oben beschriebenen Verfahren zur Bandbreitenbestimmung einer optischen Faser ermittelt wird.

Vorteilhaft umfasst die optische Datenübertragungsstrecke einen ersten optischen Transceiver am ersten Streckenende und einen zweiten optischen Transceiver am zweiten Streckenende, welche über eine erste und eine zweite optische Faser für die beiden Übertragungsrichtungen miteinander verbunden sind. Für diese Anordnung sieht das Verfahren vorzugsweise das Ermitteln der Bandbreite der ersten und der zweiten optischen Faser vor. Das Ermitteln der Bandbreite der ersten und der zweiten optischen Faser kann nacheinander oder parallel erfolgen.

Das Ermitteln der Bandbreite dient insbesondere der Diagnose von vorliegenden Bandbreitenbegrenzungen, welche Einfluss auf die maximal mögliche Datenübertragungsrate haben. Dementsprechend sieht das Verfahren vorteilhaft den Schritt des automatischen Anpassens der Übertragungsrate der Datenkommunikation in Abhängigkeit der ermittelten Bandbreite der zumindest einen optischen Faser vor.

Da durch die vorliegende Erfindung besonders vorteilhaft eine Bestimmung der Bandbreite ohne eine Umschaltung der Datenrate ermöglicht wird, ist ferner ein Verfahren zur Datenkommunikation zwischen einem ersten und einem zweiten Endgerät, welche mittels einer optischen Datenübertragungsstrecke mit zumindest einer optischen Faser miteinander verbunden sind, vorgesehen, bei dem die Bandbreite auf die oben beschriebene Art und Weise ermittelt wird, und zwar bei bestehender Kommunikationsverbindung zwischen dem ersten und zweiten Teilnehmer.

Ein elektronisches Bauteil zum Einsatz in einer optischen Datenübertragungsstrecke mit zumindest einer optischen Faser, welches insbesondere als integrierter Schaltkreis ausgebildet und zur Durchführung des oben beschriebenen Verfahren zur Ermittlung der Bandbreite einer optischen Faser geeignet ist, umfasst erfindungsgemäß Mittel zur Berechnung eines Wertes für die Bandbreite einer optischen Faser in Abhängigkeit eines ersten und eines zweiten Signalpegels unter Verwendung eines Algorithmus, welcher auf einer vorbestimmten Vorschrift basiert, wobei die Vorschrift das frequenzabhängige Dämpfungsverhalten der optischen Faser beschreibt, und ist ferner dazu ausgebildet die mittlere Lichtleistung (AVG) eines optischen Signals und die Amplitude eines modulierten optischen Signals (OMA; Optical Modulated Amplitude) zu messen.

Der erste bzw. zweite Signalpegel ist vorzugsweise proportional zu einer ersten bzw. zweiten Lichtleistungsmessgröße, welche jeweils mittels eines ersten bzw. eines zweiten Lichtleistungsmessverfahren aus Licht gewonnen wird, das mit einer vorgegebenen Modulationsfrequenz in die optische Faser eingekoppelt und nach Hindurchleiten durch die optische Faser empfangen wird, wobei das erste Lichtleistungsmessverfahren das Bestimmen der gemittelten Lichtleistung des empfangenen Lichtes und das zweite Lichtleistungsmessverfahren das Bestimmen der Amplitude des empfangenen modulierten optischen Signals umfasst.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:

Fig. 1    schematisch eine optische Übertragungsstrecke mit zwei optischen Transceivern, welche über zwei optische Fasern miteinander verbunden sind,

Fig. 2    eine schematische Darstellung einer bevorzugten Ausführungsform eines erfindungsgemäßen elektronischen Bauteils,

Fig. 3    ein schematisches Diagramm des frequenzabhängigen Dämpfungsverhaltens einer POF-Faser, und

Fig. 4    schematisch den zeitlichen Verlauf eines optischen Signals in einem Lichtwellenleiter (LWL) oder einer optischen Faser zur Veranschaulichung einer bevorzugten Ausführungsform der vorliegenden Erfindung.

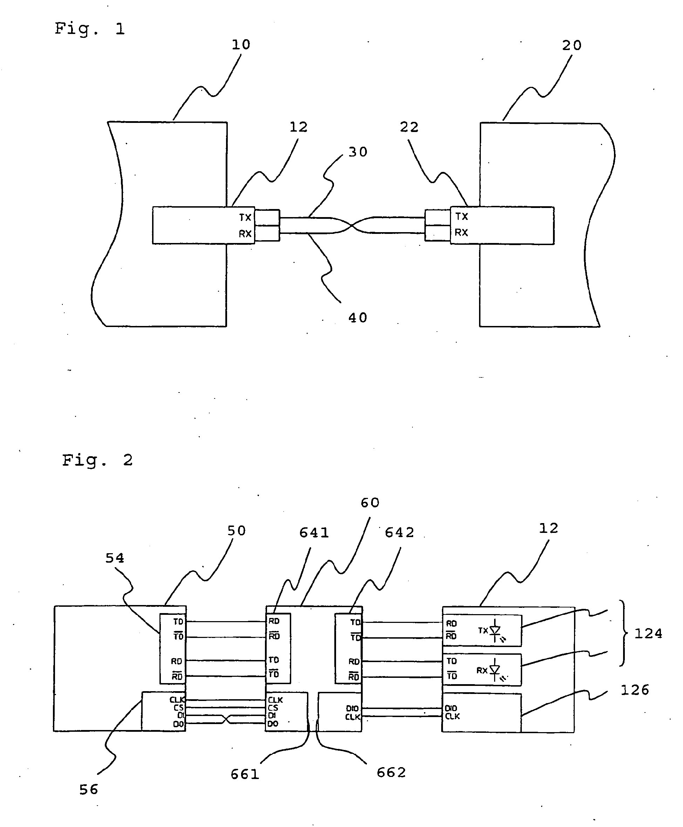

Fig. 1 zeigt eine optische Datenübertragungsstrecke zwischen einem ersten Endgerät 10 und einem zweiten Endgerät 20. Die Endgeräte 10 bzw. 20 sind mit einem ersten optischen Transceiver 12 bzw. einem zweiten optischen Transceiver 22 ausgestattet, welche über eine Duplex-LWL-Leitung mit einer ersten optischen Faser 30 und einer zweiten optischen Faser 40 für die beiden jeweiligen Datenrichtungen miteinander verbunden sind.

In diesem Ausführungsbeispiel werden als optische Fasern POF-Fasern eingesetzt und der erfindungsgemäße Bandbreitentest wird vor dem Verbindungsaufbau als Initialisierung der Schnittstellen durchgeführt. Da durch die vorliegende Erfindung besonders vorteilhaft eine Bestimmung der Bandbreite ohne eine Umschaltung der Datenrate ermöglicht wird, kann der erfindungsgemäße Bandbreitentest alternativ auch nach dem Verbindungsaufbau erfolgen. Ferner kann vorteilhaft vorgesehen sein, den erfindungsgemäßen Bandbreitentest in vorgegebenen Zeitabständen zu wiederholen.

Im Folgenden wird der prinzipielle Ablauf der Bandbreitenbestimmung gemäß der deutschen Patentanmeldung 10 2005 016 522.2 beschrieben. Zunächst sendet der Transceiver 12 ein Signal mit vorbestimmter Lichtleistung und mit einer ersten Frequenz, welche in diesem Ausführungsbeispiel typischerweise unterhalb 10 MHz liegt, und der Transceiver 22 mißt die OMA-Lichtleistung des empfangenen Signals. Anschließend sendet der Transceiver 12 ein Signal gleicher Lichtleistung aber mit einer zweiten Frequenz, welche in diesem Ausführungsbeispiel typischerweise zwischen 60 und 100 MHz liegt, und der Transceiver 22 mißt erneut die OMA-Lichtleistung des empfangenen Signals. Parallel wird die zweite Faser der Duplex-LWL-Leitung unter Vertauschung der Rollen von Transceiver 12 und 22 auf dieselbe Art vermessen. In Abhängigkeit der Kabellänge, der Lichteinkopplung (Einkoppel-NA) in die Faser und gegebenenfalls Biegungen oder Beschädigungen der Faser ist die empfangene Lichtleistung des zweiten Signals geringer als die des ersten Signals. Ist für ein FastEthernet-System diese Differenz größer als 3 dB, so ist von Übertragungsstörungen aufgrund von Bandbreitenbegrenzungen auszugehen. In diesem Fall kann eine entsprechende Warnmeldung generiert oder die Datenübertragungsrate automatisch angepasst werden.

Alternativ zur genauen Messung der empfangenen Lichtleistung kann auch, wie oben beschrieben, bei einer ersten und einer zweiten Frequenz die Sendeleistung solange variiert werden, bis auf der Empfangsseite ein vorgegebener Schwellwert für die empfangene Lichtleistung detektiert wird.

Außerdem kann die Streckenlänge der optischen Übertragungsstrecke zwischen den Endgeräten 10 und 20 über eine Laufzeitmessung, im Fall von Profinet beispielsweise über die Laufzeitmessung zur Uhrensynchronisation, ermittelt werden. Nachfolgend kann also die ermittelte Bandbreite noch mit der Kabellänge in Relation gesetzt und ausgewertet werden. Damit wird die automatische Bestimmung des Fasertyps möglich, da zum Beispiel eine POF-Faser ein anderes Bandbreiten-Längen-Produkt als eine HCS-Faser aufweist.

Das erfindungsgemäße Verfahren kann auch für Gbit-Transceiver und Multimode-Glasfasern (50/135 μm, 62,5/125μm) angewendet werden, da auch in dem Fall die mögliche Übertragungsdistanz zwischen zwei Transceivern bandbreitenbegrenzt ist. Dort sind die Frequenzen auf die Verhältnisse in den Glasfasern anzupassen.

Fig. 2 zeigt eine schematische Darstellung einer bevorzugten Ausführungsform eines erfindungsgemäßen elektronischen Bauteils 60, welches als separater Diagnose-Chip ausgebildet ist. Der Diagnose-Chip 60 ist im Datenpfad zwischen einem der physikalischen Schicht eines Netzwerks zugeordneten PHY-Transceiver 50 und einem optischen LWL-Transceiver 12 geschaltet. Zur Datenkommunikation sind in Bauteil 60 erste und zweite Schnittstellen 641 und 642 vorgesehen, über welche die PECL-Schnittstelle 124 des LWL-Transceivers 12 mit der PECL-Schnittstelle 54 des PHY-Transceivers 50 verbunden ist. Dadurch ist im Fall der normalen Ethernet-Kommunikation das als separater Diagnosechip ausgebildete Bauteil 60 für die Ethernet-Datensignale transparent.

Das Bauteil 60 umfasst ferner, insbesondere zur Abfrage der empfangenen Lichtleistung, eine erste serielle Schnittstelle 662 zum Anschluss an eine DMI-Schnittstelle 126 des optischen Transceivers 12. Außerdem ist eine zweite serielle Schnittstelle 661 zum Anschluss an eine serielle Schnittstelle 56 des PHY-Transceivers 50 vorgesehen.

In diesem Ausführungsbeispiel verwenden die Schnittstellen 126 und 662 das I$^2$C-Übertragungsprotokoll und die Schnitttellen 56 und 661 das SPI-Übertragungsprotokoll. Zur Umsetzung zwischen diesen beiden Übertragungsprotokollen ist in Bauteil 60 ein entsprechender, nicht dargestellter, Umsetzer integriert.

Die Erfindung läßt sich vorteilhaft in allen optischen Schnittstellen für FastEthernet-Geräte mit POF- und HCS-Faser-Schnittstellen, sowie für Glasfaserschnittstellen, welche insbesondere für Systeme mit Datenübertragungsraten von 10 Gbit/s interessant sind, einsetzen.

Besonders bei Profinet-Schnittstellen bietet das Verfahren zusätzliche Vorteile gegenüber herkömmlichen Diagnose-Systemen, da es nicht direkt auf dem verwendeten LWL-Transceiver beruht, sondern ein digitales Verfahren ist.

Voraussetzung ist nur, daß der zum Einsatz kommende LWL-Transceiver eine DMI-Schnittstelle nach SFF-8472 besitzt und den AC-Anteil der Lichtleistung nach dem dort beschriebenen OMA-Verfahren (Optical Modulated Amplitude) sowie die gemittelte Lichtleistung nach dem dort beschriebenen AVG-Verfahren mißt. Zur Berechnung der Bandbreite aus den mittels eines Transceivers ermittelten Werten, welcher die zwei unterschiedlichen Lichtleistungsmessverfahren OMA und AVG beherrscht, kommt vorteilhaft eine auswertende Einheit zum Einsatz, welche beispielsweise als Prozessor eines Ethernet-Gerätes ausgebildet ist.

Das Verfahren gemäß der deutschen Patentanmeldung 10 2005 016 522.2 beruhte prinzipiell darauf, beispielsweise mit Hilfe der DMI-Schnittstelle eines optischen Transceivers, zwei Dämpfungsmessungen bei zwei unterschiedlichen Frequenzen durchzuführen. Auf besonders einfache Weise lassen sich die Signale unterschiedlicher Frequenz durch ein kontinuierliches "10"-Bitmuster mit entsprechender Frequenz darstellen. Besonders vorteilhaft kann hierfür das IDLE-Signal eines Netzwerks eingesetzt werden.

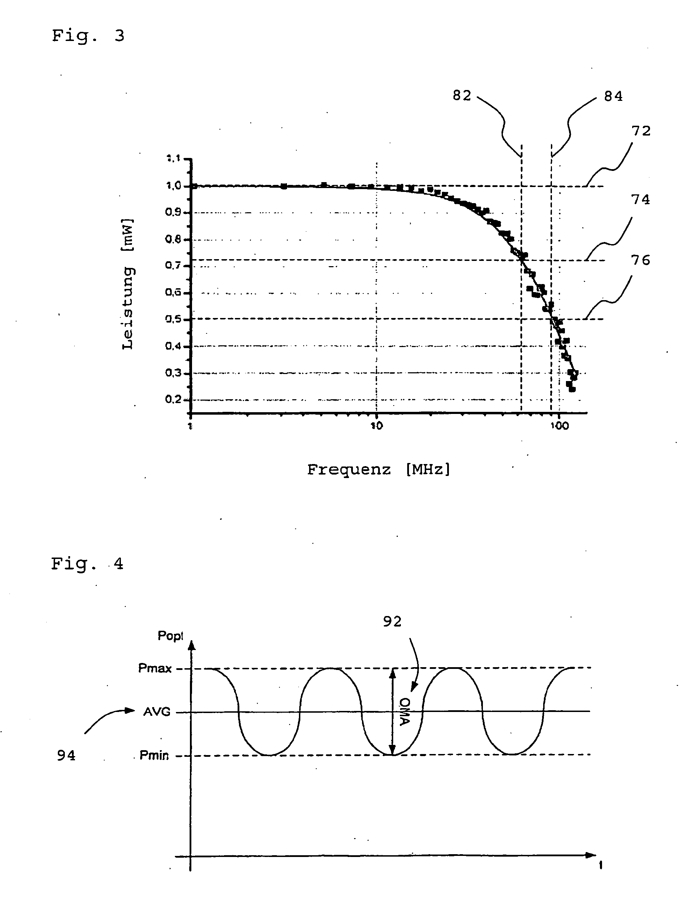

Im Folgenden wird mit Bezug auf Fig. 3 ein konkretes Beispiel der Bandbreitenermittlung gemäß der deutschen Patentanmeldung 10 2005 016 522.2 beschrieben. Die Signale erster und zweiter Frequenz werden dabei mittels eines IDLE-Signals gemäß 10Base-FL für die erste Frequenz und mittels eines IDLE-Signals gemäß 100Base-FX für die zweite Frequenz gebildet. Das IDLE-Signal gemäß 10Base-FL weist eine Frequenz von 0,5 MHz auf, welche sich aus wechselnden "Licht an"- und "Licht aus"-Signalen von jeweils 1 μs Dauer ergibt. Das IDLE-Signal gemäß 100Base-FX weist eine Frequenz von 62,5 MHz auf, welche sich aus der Datenrate von 100 Mbit/s, der 4B/5B-Kodierung und einem Wechsel im NRZI-Code pro Bitzeit des IDLE-Signals ergibt.

Die erste Messung erfolgt dementsprechend bei einer Frequenz von 0,5 MHz, welche weit unterhalb der Bandbreite 84 der in diesem Ausführungsbeispiel verwendeten POF-Faser von etwa 90 MHz liegt. Dazu wird der Sender des ersten Transceivers mit dieser Frequenz angeregt und die am Empfänger des zweiten Transceivers ankommende gemittelte Lichtleistung über dessen DMI-Schnittstelle ermittelt. Bei dieser Frequenz findet keine frequenzabhängige Dämpfung statt und die empfangene Lichtleistung hat den in Fig. 3 mit Bezugszeichen 72 bezeichneten Pegel.

Anschließend wird eine zweite Messung mit der Frequenz 62,5 MHz durchgeführt, in Fig. 3 mit dem Bezugszeichen 82 versehen, welche in der Größenordnung der Bandbreite 84 von 90 MHz der zu vermessenden Faser liegt, bei welcher die empfangene Lichtleistung 76 gegenüber der Frequenz von Null auf die Hälfte abgesunken ist.

Aufgrund der Tiefpaß-Charakteristik der Faser ist diese zweite ermittelte Lichtleistung 74 kleiner als die erste 72. Aus der bekannten Tiefpaßcharakteristik der verwendeten LWL-Faser kann nun erfindungsgemäß auf die Bandbreite der Verbindung und über eine automatische Streckenlängenmessung auch auf den Fasertyp geschlossen werden.

Dazu wird als Vorschrift, welche das frequenzabhängige Dämpfungsverhalten der Faser beschreibt, eine Gaußsche Tiefpassfunktion entsprechend der Gleichung

$$(2) \quad P(f) = P_0 \cdot \exp\left(- \frac{f^2}{f_0^2}\right)$$

verwendet.

In diesem Ausführungsbeispiel wird die empfangene Lichtleistung über die DMI-Schnittstelle als elektrischer Signalpegel gemessen und es ergeben sich folgende Messwerte:

$$U(0,5 \text{ MHz}) = 452 \text{ mV} = U_0$$

$$U(62,5 \text{ MHz}) = 324 \text{ mV}$$

$$\Rightarrow \frac{U}{U_0} = 0,72$$

Da der über das OMA-Verfahren ermittelte und von der DMI-Schnittstelle gelieferte Signalpegel proportional zur empfangenen Lichtleistung ist, ergibt sich aus obiger Gleichung (2)

$$(3) \quad U(f) = U_0 \cdot \exp\left(-\frac{f^2}{f_0^2}\right); \text{ mit } U_0 = U(0,5 \text{ MHz})$$

$$(4) \quad \Rightarrow f_0 = \sqrt{-\frac{(62,5\text{MHz})^2}{\ln\left(\frac{U}{U_0}\right)}} = 109,05\text{MHz}$$

Hieraus lässt sich nun die Bandbreite der optischen Faser berechnen zu

$$f_{3dB} = \sqrt{-\ln(0,5)} \cdot f_0 = 90,8 \text{ MHz}$$

In analoger Weise lässt sich die Bandbreite der optischen Faser berechnen, wenn die Sendeleistung variiert wird, bis die empfangene optische Leistung einen vorgegebenen Schwellwert erreicht, wobei der Schwellwert für beide Frequenzen gleich ist.

Für diese Variante ergibt sich

$$(5) \quad f_0 = \sqrt{-\frac{(f_2)^2}{\ln\left(\frac{P_{0;f_1}}{P_{0;f_2}}\right)}} = \sqrt{-\frac{(62,5\text{MHz})^2}{\ln\left(\frac{P_{0;0,5\text{MHz}}}{P_{0;62,5\text{MHz}}}\right)}}$$

mit

$P_{0;f1}$ : Optische Sendeleistung zum Erreichen des Schwellwertes bei der ersten Frequenz, und

$P_{0;f2}$ : Optische Sendeleistung zum Erreichen des Schwellwertes bei der zweiten Frequenz.

Bei einem linearen Zusammenhang zwischen Senderstrom I der zum Senden verwendeten LED oder des zum Senden verwendeten Lasers und eingekoppelter Lichtleistung ergibt sich

$$(6) \quad f_0 = \sqrt{- \frac{(f_2)^2}{\ln\left(\frac{I_{0;f_1}}{I_{0;f_2}}\right)}}$$

mit

$I_{0;f1}$ :     Senderstrom zum Erreichen des Schwellwertes bei der ersten Frequenz, und

$I_{0;f2}$ :     Senderstrom zum Erreichen des Schwellwertes bei der zweiten Frequenz.

Im Folgenden wird mit Bezug auf die Fig. 4 beschrieben, wie sich gemäß einer besonders bevorzugten Ausführungsform der vorliegenden Erfindung die Bandbreite einer LWL-Verbindung bei bekanntem physikalischen Verhalten der verwendeten LWL-Faser aus der mittleren Lichtleistung (AVG) und der Peak-to-Peak Lichtleistung, d.h. der Amplitude des modulierten Signals (OMA) errechnen lässt, wobei in diesem Ausführungsbeispiel als LWL-Fasern oder optische Fasern Polymerfasern vorgesehen sind. Die Begriffe Kabel und Faser werden im Folgenden im wesentlichen synonym verwendet und bezeichnen allgemein eine optische Faser.

Dargestellt ist in Fig. 4 der zeitliche Verlauf eines optischen Signals in einem Lichtwellenleiter (LWL), wobei die Lichtleistung $P_{opt}$ gegen die Zeit t aufgetragen ist. Das Signal weist einen hohen DC-Anteil bei einer kleinen modulierten Signalamplitude OMA 92 auf, wobei sich der Wert für die modulierte Signalamplitude OMA 92 aus der Differenz der maximalen Lichtleistung $P_{max}$ und der minimalen Lichtleistung $P_{min}$ ergibt. Solche Verhältnisse sind im Bereich der Bandbreitenbegrenzung einer optischen Übertragungsstrecke typisch.

Für eine Polymerfaser ist bekannt, daß sich die Faser wie ein gaußscher Tiefpass verhält. Daher lässt sich die Signalamplitude 92 durch folgende Beziehung beschreiben:

$$(7) \quad OMA = A_0(1) \cdot \exp\left(- \frac{f^2}{f_0{}^2}\right) = A(1, f)$$

$A_0(1)$ ist die ursprüngliche Amplitude des optischen Signals am Faseranfang, die nach einer Faserlänge 1 noch um die normale Kabeldämpfung verringert wird. Somit ergibt sich

$$A_0(1) = A_0 \cdot \exp(- \alpha \cdot 1).$$

Hier ist $A_0$ die tatsächlich eingekoppelte Amplitude und $\alpha$ der Absorptionskoeffizient der Faser.

Die mittlere Lichtleistung AVG 94 ergibt sich nach Fig. 4 wie folgt:

$$AVG = P_{min}(1, f) + \frac{1}{2} \cdot A(1, f)$$

Dabei ist $P_{min}(l,f)$ die minimale Lichtleistung in Abhängigkeit der Kabellänge 1 und der verwendeten Übertragungsfrequenz f. Dieser Wert ist über die Kabellänge abhängig von der Kabeldämpfung $\alpha$ und über die Frequenz f und ebenfalls über die Kabellänge 1 abhängig vom Bandbreitenverhalten der verwendeten Faser.

Nun ist aber der Mittelwert AVG 94 der Lichtleistung allein von der Dämpfung des Kabels abhängig, weil der Bandbreiteneinfluss zu keiner Absorption von Energie führt, sondern lediglich zu einer Umverteilung der optischen Energie vom modulierten Lichtanteil (AC-Anteil) zum Gleichlichtanteil (DC-Anteil). Diese Überlegung ist somit durch das Prinzip der Energieerhaltung der optischen Lichtleistung gerechtfertigt.

Dies bedeutet also mathematisch folgendes:

$$(8) \quad AVG = P_{min,0}(1) + \frac{1}{2} \cdot A_0(1)$$

Die Gleichungen (7) und (8) beschreiben nun ein Gleichungssystem mit zwei Unbekannten, nämlich den Werten $A_0(1)$ und der zu ermittelnden Frequenz $f_0$, die das Bandbreitenverhalten der Faser beschreibt. Die Werte AVG 94 und OMA 92 ergeben sich aus der Messung über den verwendeten LWL Transceiver und $P_{min,0}(l)$ ist über den im Transceiver verwendeten Sender bekannt. Vorteilhafterweise ist der im Transceiver verwendete Sender so schnell, daß das Licht, welches am Anfang in die verwendete Faser eingekoppelt wird, innerhalb einer Bitzeit wirklich komplett aus geht. In diesem Fall ist $P_{min,0} = 0$ und damit auch $P_{min,0}(l) = 0$. f ist dabei die Frequenz, bei der die Messungen durchgeführt wurden. Für ein Fast Ethernet-System mit 125 MBd Symbolrate ist dies typischerweise 62,5 MHz.

Setzt man nun die Gleichungen (7) und (8) ineinander ein und stellt alles nach der zu ermittelnden Frequenz $f_0$ um, so erhält man:

$$f_0 = \frac{f}{\sqrt{\ln\left(2 \cdot \frac{AVG - P_{min,0}(1)}{OMA}\right)}}$$

bzw. für den Fall, dass $P_{min,0}(l) \approx 0$

$$f_0 = \frac{f}{\sqrt{\ln\left(2 \cdot \frac{AVG}{OMA}\right)}}$$

Üblicherweise wird als Bandbreite einer Faser nicht die Frequenz $f_0$ angegeben, sondern die Frequenz, bei der die Amplitude durch den Bandbreiteneinfluss um 3 dB verringert wurde. Diese wird im Folgenden $f_{3dB}$ genannt. Der Zusammenhang läßt sich einfach aus dem Gaußschen Tiefpaß errechnen und liefert:

$$f_{3dB} = f_0 \cdot \sqrt{\ln(2)}$$

Damit ist gezeigt, daß die Bandbreite einer LWL-Verbindung online im laufenden Kommunikationsbetrieb zum Beispiel bei Fast Ethernet Anwendungen mit Polymerfasern durch einfache Messung der mittleren Lichtleistung AVG und der modulierten Signalamplitude OMA am Ende einer Kabelstrecke erfolgen kann. Es muß in dem Fall nicht mehr zwischen mindestens zwei verschiedenen Frequenzen umgeschaltet werden, wie es in der deutschen Patentanmeldung 10 2005 016 522.2 noch vorgeschlagen wurde. Daher stellt dieses Verfahren nochmals eine deutliche Vereinfachung der Bandbreitenmessung dar.

**Patentansprüche**

1. Verfahren zur Bestimmung der Bandbreite zumindest einer optischen Faser, umfassend die Schritte:

- Einkoppeln von Licht mit einer vorgegebenen Modulationsfrequenz und einer vorgegebenen optischen Leistung in die optische Faser,
- Messen eines ersten Signalpegels in Abhängigkeit der optischen Leistung des durch die optische Faser hindurchgeleiteten Lichtes,
- Messen eines zweiten Signalpegels in Abhängigkeit der optischen Leistung des durch die optische Faser hindurchgeleiteten Lichtes, und
- Ermitteln der Bandbreite der optischen Faser in Abhängigkeit der vorgegebenen optischen Leistung und/oder des gemessenen ersten und zweiten Signalpegels unter Verwendung einer vorbestimmten Vorschrift, welche das frequenzabhängige Dämpfungsverhalten der optischen Faser beschreibt,

wobei das eingekoppelte Licht bei Messen des ersten Signalpegels und bei Messen des zweiten Signalpegels im Wesentlichen die gleiche Modulationsfrequenz aufweist.

2. Verfahren nach Anspruch 1, wobei das Einkoppeln von Licht in die optische Faser

- das Einkoppeln von erstem Licht mit einer ersten optischen Leistung in die optische Faser und
- das Einkoppeln von zweitem Licht mit einer zweiten optischen Leistung in die optische Faser umfasst, wobei die Modulationsfrequenz des ersten Lichtes
und die Modulationsfrequenz des zweiten Lichtes im Wesentlichen den gleichen Wert aufweisen, und wobei

- das Messen des ersten Signalpegels in Abhängigkeit der optischen Leistung des durch die optische Faser hindurchgeleiteten ersten Lichtes erfolgt, und
- das Messen des zweiten Signalpegels in Abhängigkeit der optischen Leistung des durch die optische Faser hindurchgeleiteten zweiten Lichtes erfolgt.

3. Verfahren nach Anspruch 2, wobei
die erste optische Leistung und die zweite optische Leistung vorbestimmte Werte aufweisen.

4. Verfahren nach einem der Ansprüche 2 oder 3, wobei die erste optische Leistung und die zweite optische Leistung im wesentlichen gleich sind.

5. Verfahren nach Anspruch 2, wobei

- die erste optische Leistung variiert wird, bis der gemessene erste Signalpegel einen vorbestimmten ersten Schwellwert erreicht, und
- die zweite optische Leistung variiert wird, bis der gemessene zweite Signalpegel einen vorbestimmten zweiten Schwellwert erreicht.

6. Verfahren nach Anspruch 5, wobei der erste und zweite Schwellwert im wesentlichen gleich sind.

7. Verfahren nach einem der vorstehenden Ansprüche, wobei die vorbestimmte Vorschrift, welche das frequenzabhängige Dämpfungsverhalten der optischen Faser beschreibt, eine Gaußsche Tiefpaß-Funktion ist.

8. Verfahren nach einem der vorstehenden Ansprüche, wobei die zumindest eine optische Faser ein Polymer und/ oder ein Glas umfasst, insbesondere ausgebildet als POF- oder HCS-Faser.

9. Verfahren nach einem der vorstehenden Ansprüche, wobei die Modulationsfrequenz etwa bei der Bandbreite der optischen Faser liegt.

10. Verfahren nach einem der vorstehenden Ansprüche, wobei die Modulationsfrequenz des ersten Lichtes und die Modulationsfrequenz des zweiten Lichtes oberhalb der Bandbreite der optischen Faser liegt.

11. Verfahren nach einem der vorstehenden Ansprüche, wobei das Messen des ersten Signalpegels das Bestimmen einer gemittelten Lichtleistung (AVG) umfasst.

12. Verfahren nach einem der vorstehenden Ansprüche, wobei das Messen des zweiten Signalpegels das Messen der Amplitude des modulierten optischen Signals nach dem OMA-Verfahren (Optical Modulated Amplitude) umfasst.

13. Verfahren nach einem der vorstehenden Ansprüche, wobei das Messen des ersten und/oder zweiten Signalpegels mittels eines optischen Transceivers erfolgt, welcher eine DMI-Schnittstelle (Diagnostic Monitoring Interface) gemäß SFF-8472 aufweist.

14. Verfahren nach einem der vorstehenden Ansprüche, wobei das durch die optische Faser geleitete Licht ein Daten-signal umfasst, welches abwechseind die Bitwerte 1 und 0 aufweist.

**15.** Verfahren nach Anspruch 14, wobei das Datensignal ein IDLE-Signal gemäß Netzwerkstandard, insbesondere gemäß 10Base-FL oder 100Base-FX, ist.

**16.** Verfahren nach einem der vorstehenden Ansprüche, ferner umfassend die Schritte

    - Ermitteln der Länge der optischen Faser mittels einer Laufzeitmessung,
    - Bestimmen des Bandbreiten-Längen-Produktes der optischen Faser aus der ermittelten Bandbreite und der ermittelten Länge der optischen Faser.

**17.** Verfahren nach Anspruch 16, ferner umfassend

    - Ermitteln des Fasertyps der optischen Faser in Abhängigkeit des Bandbreiten-Längen-Produktes mittels hinterlegter Wertebereiche des Bandbreiten-Längen-Produktes für zumindest zwei unterschiedliche Fasertypen.

**18.** Verfahren zum Aufbauen einer Verbindung zur Datenkommunikation zwischen einem ersten und einem zweiten Endgerät, welche mittels einer optischen Datenübertragungsstrecke mit zumindest einer optischen Faser miteinander verbunden sind, umfassend das Initialisieren der Verbindung, wobei das Initialisieren das Ermitteln der Bandbreite der zumindest einen optischen Faser gemäß einem der Ansprüche 1 bis 17 umfasst.

**19.** Verfahren nach Anspruch 18, wobei die optische Datenübertragungsstrecke einen ersten optischen Transceiver am ersten Streckenende und einen zweiten optischen Transceiver am zweiten Streckenende umfasst, welche über eine erste und eine zweite optische Faser für die beiden Übertragungsrichtungen miteinander verbunden sind, und wobei die Bandbreite der ersten und der zweiten optischen Faser ermittelt wird.

**20.** Verfahren nach Anspruch 19, wobei das Ermitteln der Bandbreite der ersten und der zweiten optischen Faser nacheinander erfolgt.

**21.** Verfahren nach Anspruch 19, wobei das Ermitteln der Bandbreite der ersten und der zweiten optischen Faser im wesentlichen gleichzeitig erfolgt.

**22.** Verfahren nach einem der Ansprüche 18 bis 21, wobei das Initialisieren der Verbindung den Schritt des automatischen Anpassens der Übertragungsrate der Datenkommunikation in Abhängigkeit der ermittelten Bandbreite der zumindest einen optischen Faser umfasst.

**23.** Verfahren zur Datenkommunikation zwischen einem ersten und einem zweiten Endgerät, welche mittels einer optischen Datenübertragungsstrecke mit zumindest einer optischen Faser miteinander verbunden sind, umfassend das Ermitteln der Bandbreite der zumindest einen optischen Faser gemäß einem der Ansprüche 1 bis 17 bei bestehender Kommunikationsverbindung zwischen dem ersten und zweiten Teilnehmer.

**24.** Verfahren nach Anspruch 23, wobei das Ermitteln der Bandbreite der zumindest einen optischen Faser in vorgegebenen Zeitabständen wiederholt wird.

**25.** Elektronisches Bauteil zum Einsatz in einer optischen Datenübertragungsstrecke, welche zumindest eine optische Faser aufweist, insbesondere ausgebildet als integrierter Schaltkreis, ausgebildet zur Durchführung eines Verfahrens gemäß einem der vorstehenden Ansprüche, umfassend Mittel zur Berechnung eines Wertes für die Bandbreite einer optischen Faser in Abhängigkeit eines ersten und eines zweiten Signalpegels unter Verwendung eines Algorithmus, welcher auf einer vorbestimmten Vorschrift basiert, wobei die Vorschrift das frequenzabhängige Dämpfungsverhalten der optischen Faser beschreibt, wobei das Bauteil dazu ausgebildet ist, die mittlere Lichtleistung (AVG) eines optischen Signals und die Amplitude eines modulierten optischen Signals (OMA; Optical Modulated Amplitude) zu messen.

**Claims**

**1.** Method for determining the bandwidth of at least one optical fibre, comprising the steps of:

    - coupling light with a predetermined modulation frequency and a predetermined optical power into the optical fibre,

- measuring a first signal level as a function of the optical power of the light passed through the optical fibre,
- measuring a second signal level as a function of the optical power of the light passed through the optical fibre, and
- determining the bandwidth of the optical fibre as a function of the predetermined optical power and/or the measured first and second signal level using a predetermined specification which describes the frequency-dependent attenuation response of the optical fibre,
wherein the coupled-in light, when measuring the first signal level and when measuring the second signal level, has substantially the same modulation frequency.

2. Method as claimed in Claim 1, wherein coupling light into the optical fibre includes

- coupling first light having a first optical power into the optical fibre, and
- coupling second light having a second optical power into the optical fibre,
wherein the modulation frequency of the first light and the modulation frequency of the second light have substantially the same value, and wherein
- the first signal level is measured as a function of the optical power of the first light passed through the optical fibre, and
- the second signal level is measured as a function of the optical power of the second light passed through the optical fibre.

3. Method as claimed in Claim 2, wherein the first optical power and the second optical power have predetermined values.

4. Method as claimed in any one of Claims 2 or 3, wherein the first optical power and the second optical power are substantially the same.

5. Method as claimed in Claim 2, wherein

- the first optical power is varied until the measured first signal level reaches a predetermined first threshold, and
- the second optical power is varied until the measured second signal level reaches a predetermined second threshold.

6. Method as claimed in Claim 5, wherein the first and second thresholds are substantially the same.

7. Method as claimed in any one of the preceding claims, wherein the predetermined specification, which describes the frequency-dependent attenuation response of the optical fibre, is a Gaussian low-pass function.

8. Method as claimed in any one of the preceding claims, wherein the at least one optical fibre includes a polymer and/or a glass, in particular formed as POF or HCS fibres.

9. Method as claimed in any one of the preceding claims, wherein the modulation frequency is approximately at the bandwidth of the optical fibre.

10. Method as claimed in any one of the preceding claims, wherein the modulation frequency of the first light and the modulation frequency of the second light are above the bandwidth of the optical fibre.

11. Method as claimed in any one of the preceding claims, wherein measuring the first signal level includes determining an averaged light power (AVG).

12. Method as claimed in any one of the preceding claims, wherein measuring the second signal level includes measuring the amplitude of the modulated optical signal according to the OMA (Optical Modulated Amplitude) method.

13. Method as claimed in any one of the preceding claims, wherein the first and/or second signal level is/are measured by means of an optical transceiver which has a DMI (Diagnostic Monitoring Interface) according to SFF-8472.

14. Method as claimed in any one of the preceding claims, wherein the light passed through the optical fibre includes a data signal which alternately has the bit values 1 and 0.

15. Method as claimed in Claim 14, wherein the data signal is an IDLE signal according to the network standard, in particular according to 10Base-FL or 100Base-FX.

16. Method as claimed in any one of the preceding claims, further comprising the steps of:

- determining the length of the optical fibre by means of a propagation time measurement,
- determining the bandwidth-length product of the optical fibre from the determined bandwidth and the determined length of the optical fibre.

17. Method as claimed in Claim 16, further comprising:

- determining the fibre type of the optical fibre as a function of the bandwidth-length product by means of stored value ranges of the bandwidth-length product for at least two different fibre types.

18. Method for establishing a connection for data communications between a first and a second terminal, which are connected to each other by means of an optical data transmission path with at least one optical fibre, comprising the initialisation of the connection, wherein the initialisation includes determining the bandwidth of the at least one optical fibre as claimed in any one of Claims 1 to 17.

19. Method as claimed in Claim 18, wherein the optical data transmission path includes a first optical transceiver at the first path end and a second optical transceiver at the second path end, which are connected to each other via a first and a second optical fibre for the two transmission directions, and wherein the bandwidth of the first and the second optical fibres is determined.

20. Method as claimed in Claim 19, wherein the bandwidths of the first and the second optical fibres are determined one after the other.

21. Method as claimed in Claim 19, wherein the bandwidths of the first and second optical fibres are determined substantially simultaneously.

22. Method as claimed in any one of Claims 18 to 21, wherein the initialisation of the connection includes the step of automatically adjusting the transmission rate of the data communications as a function of the determined bandwidth of the at least one optical fibre.

23. Method for data communications between a first and a second terminal, which are connected to each other by means of an optical data transmission path with at least one optical fibre, including the determination of the bandwidth of the at least one optical fibre as claimed in any one of Claims 1 to 17 for an existing communications connection between the first and second subscribers.

24. Method as claimed in Claim 23, wherein the determination of the bandwidth of the at least one optical fibre is repeated at predetermined time intervals.

25. Electronic component for use in an optical data transmission path, which has at least one optical fibre, in particular formed as an integrated circuit, formed for implementing a method as claimed in any one of the preceding claims, including means for calculating a value for the bandwidth of an optical fibre as a function of a first and a second signal level using an algorithm based on a predetermined specification, wherein the specification describes the frequency-dependent attenuation response of the optical fibre, wherein the component is formed for measuring the average light power (AVG) of an optical signal and the amplitude of a modulated optical signal (OMA; Optical Modulated Amplitude).

**Revendications**

1. Procédé de détermination de la largeur de bande d'au moins une fibre optique, comprenant les étapes suivantes :

- couplage d'une lumière ayant une fréquence de modulation définie et une puissance optique définie dans la fibre optique,
- mesure d'un premier niveau de signal en fonction de la puissance optique de la lumière traversant la fibre optique,

- mesure d'un deuxième niveau de signal en fonction de la puissance optique de la lumière traversant la fibre optique, et
- détermination de la largeur de bande de la fibre optique en fonction de la puissance optique définie et/ou du premier et du deuxième niveau de signal mesuré, par application d'une instruction définie, laquelle décrit la caractéristique d'atténuation de la fibre optique en fonction de la fréquence,
la lumière couplée présentant sensiblement la même fréquence de modulation lors de la mesure du premier niveau de signal et lors de la mesure du deuxième niveau de signal.

2. Procédé selon la revendication 1, dans lequel le couplage de lumière dans la fibre optique comprend :

- le couplage d'une première lumière ayant une première puissance optique dans la fibre optique,
- le couplage d'une deuxième lumière ayant une deuxième puissance optique dans la fibre optique, la fréquence de modulation de la première lumière et la fréquence de modulation de la deuxième lumière ayant sensiblement la même valeur, et dans lequel :
- la mesure du premier niveau de signal est effectuée en fonction de la puissance optique de la première lumière traversant la fibre optique, et
- la mesure du deuxième niveau de signal est effectuée en fonction de la puissance optique de la deuxième lumière traversant la fibre optique.

3. Procédé selon la revendication 2, dans lequel la première puissance optique et la deuxième puissance optique ont des valeurs définies.

4. Procédé selon la revendication 2 ou la revendication 3, dans lequel la première puissance optique et la deuxième puissance optique sont sensiblement égales.

5. Procédé selon la revendication 2, dans lequel :

- la première puissance optique est variée jusqu'à ce que le premier niveau de signal mesuré atteigne une première valeur seuil mesurée, et
- la deuxième puissance optique est variée jusqu'à ce que le deuxième niveau de signal atteigne une deuxième valeur seuil définie.

6. Procédé selon la revendication 5, dans lequel la première et la deuxième valeur seuil sont sensiblement égales.

7. Procédé selon l'une des revendications précédentes, dans lequel l'instruction définie qui décrit la caractéristique d'atténuation de la fibre optique en fonction de la fréquence, est une fonction passe-bas gaussienne.

8. Procédé selon l'une des revendications précédentes, dans lequel l'au moins une fibre optique contient un polymère et/ou un verre, et est notamment réalisée comme fibre POF ou HCS.

9. Procédé selon l'une des revendications précédentes, dans lequel la fréquence de modulation est sensiblement équivalente à la largeur de bande de la fibre optique.

10. Procédé selon l'une des revendications précédentes, dans lequel la fréquence de modulation de la première lumière et la fréquence de modulation de la deuxième lumière sont supérieures à la largeur de bande de la fibre optique.

11. Procédé selon l'une des revendications précédentes, dans lequel la mesure du premier niveau de signal comprend la détermination d'une puissance lumineuse moyenne (AVG).

12. Procédé selon l'une des revendications précédentes, dans lequel la mesure du deuxième niveau de signal comprend la mesure de l'amplitude du signal optique modulé suivant le procédé OMA (Optical Modulated Amplitude).

13. Procédé selon l'une des revendications précédentes, dans lequel la mesure du premier et/ou du deuxième niveau de signal est effectuée au moyen d'un émetteur-récepteur optique comportant une interface DMI (Diagnostic Monitoring Interface) suivant la norme SFF-8472.

14. Procédé selon l'une des revendications précédentes, dans lequel la lumière transmise par la fibre optique comprend un signal de données présentant les valeurs de bit 1 et 0 en alternance.

**15.** Procédé selon la revendication 14, dans lequel le signal de données est un signal IDLE suivant la norme de réseau, en particulier suivant 10Base-FL ou 100Base-FX.

**16.** Procédé selon l'une des revendications précédentes, comprenant en outre les étapes suivantes :

- détermination de la longueur de la fibre optique au moyen d'une mesure de temps de propagation,
- détermination du produit largeur de bande-longueur de la fibre optique à partir de la largeur de bande déterminée et de la longueur de fibre optique déterminée.

**17.** Procédé selon la revendication 16, comprenant en outre l'étape de :

- détermination du type de fibre de la fibre optique en fonction du produit largeur de bande-longueur, au moyen de plages de valeur archivées pour le produit largeur de bande-longueur pour au moins deux types de fibre différents.

**18.** Procédé d'établissement d'une connexion pour la communication de données entre un premier et un deuxième appareil terminal, lesquels sont reliés l'un à l'autre par
un trajet de transmission optique de données comportant au moins une fibre optique, comprenant l'initialisation de la connexion, ladite initialisation comprenant la détermination de la largeur de bande de l'au moins une fibre optique selon l'une des revendications 1 à 17.

**19.** Procédé selon la revendication 18, dans lequel le trajet de transmission optique de données comprend un premier émetteur-récepteur optique à la première extrémité du trajet et un deuxième émetteur-récepteur optique à la deuxième extrémité du trajet, lesquels sont reliés l'un à l'autre par une première et une deuxième fibre optique pour les deux sens de transmission, et dans lequel les largeurs de bande de la première et de la deuxième fibre optique sont déterminées.

**20.** Procédé selon la revendication 19, dans lequel les largeurs de bande de la première et de la deuxième fibre optique sont déterminées successivement.

**21.** Procédé selon la revendication 19, dans lequel les largeurs de bande de la première et de la deuxième fibre optique sont déterminées sensiblement simultanément.

**22.** Procédé selon l'une des revendications 18 à 21, dans lequel l'initialisation de la connexion comprend l'étape d'ajustement automatique du débit de transmission de la communication de données en fonction de la largeur de bande déterminée pour l'au moins une fibre optique.

**23.** Procédé de communication de données entre un premier et un deuxième appareil terminal, lesquels sont reliés l'un à l'autre par un trajet de transmission optique de données comportant au moins une fibre optique, comprenant la détermination de la largeur de bande de l'au moins une fibre optique selon l'une des revendications 1 à 17 en cas de liaison de communication existante entre le premier et le deuxième abonnés.

**24.** Procédé selon la revendication 23, dans lequel la détermination de la largeur de bande de l'au moins une fibre optique est répétée à intervalles temporels définis.

**25.** Composant électronique destiné à être mis en oeuvre dans un trajet de transmission optique comportant au moins une fibre optique, réalisé en particulier comme circuit intégré, prévu pour l'exécution d'un procédé selon l'une des revendications précédentes, comprenant un moyen de calcul d'une valeur pour la largeur de bande d'une fibre optique en fonction d'un premier et d'un deuxième niveau de signal, par application d'un algorithme basé sur une instruction définie, ladite instruction décrivant la caractéristique d'atténuation de la fibre optique en fonction de la fréquence, ledit composant étant conçu pour mesurer la puissance lumineuse moyenne (AVG) d'un signal optique et l'amplitude d'un signal optique modulé (OMA ; Optical Modulated Amplitude).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4217899 C2
- EP 1227604 A2
- DE 102005016522
- DE 2005016522
- EP 1018642 A